# EUROPEAN PATENT APPLICATION

(11) **EP 4 756 920 A1**
(43) Date of publication of application: **10.06.2026**
(21) Application number: 24848733.2
(22) Date of filing: 24.06.2024
(51) Int. Cl.: H01M 4/525, H01M 4/505

(54) **POSITIVE ELECTRODE ACTIVE MATERIAL FOR NONAQUEOUS ELECTROLYTE SECONDARY BATTERY, METHOD FOR PRODUCING POSITIVE ELECTRODE ACTIVE MATERIAL, AND NONAQUEOUS ELECTROLYTE SECONDARY BATTERY**

(30) Priority: 31.07.2023 JP 2023124272
(71) Applicant: Panasonic Intellectual Property Management Co., Ltd., Kadoma-shi, Osaka 571-0057 (JP)
(72) Inventor: KAWADA, Hiroshi, kadoma-shi, Osaka 571-0057 (JP); ESAKI, Shogo, kadoma-shi, Osaka 571-0057 (JP)
(74) Representative: Novagraaf International SA
(86) International application number: PCT/JP2024/022774
(87) International publication number: WO 2025/028073

(57) **Abstract**

A positive electrode active material according to an exemplary embodiment of the present invention is a composite oxide represented by a composition formula LiₓNa_{y}NiₐM₁₋ₐO_{d}, where M is at least one element selected from the group consisting of transition metal elements and typical elements other than Li, Na, and Ni, 0.80≤x≤1.15, 0.02≤y≤0.20, 0.90≤x+y≤1.20, 0.40≤a≤0.95, and d is a value satisfying electrical neutrality. When 1 L of water is added to 1000 g of the composite oxide, the concentration of the alkali component eluted in water is less than 700 mmol/L.

## Description

### TECHNICAL FIELD

The present disclosure relates to a positive electrode active material for a non-aqueous electrolyte secondary battery, a method for producing a positive electrode active material, and a non-aqueous electrolyte secondary battery using this positive electrode active material.

### BACKGROUND ART

In non-aqueous electrolyte secondary batteries such as lithium-ion secondary batteries, many studies have been made on a positive electrode active material since the positive electrode active material has a significant influence on battery performance such as input/output characteristics, capacity, and durability. For the positive electrode active material, a lithium-transition metal composite oxide containing a transition metal element such as Ni or Mn is generally used. The type and addition amount of elements contained in the lithium-transition metal composite oxide, the crystal structure of the composite oxide, and the like significantly affect the battery performance, and even a slight change in these physical properties may fail to achieve the desired performance.

For example, Patent Literatures 1 to 3 disclose the application of a Na-containing transition metal composite oxide as a positive electrode active material for the purpose of realizing a non-aqueous electrolyte secondary battery having high capacity and excellent durability. In addition, Patent Literatures 4 to 6 disclose that a transition metal oxide, a lithium compound, and a sodium compound are mixed and calcinated to synthesize a Na-containing transition metal composite oxide.

### CITATION LIST

### PATENT LITERATURE

PATENT LITERATURE 1: Japanese Patent No. 6395051
PATENT LITERATURE 2: Japanese Patent No. 6792836
PATENT LITERATURE 3: Japanese Unexamined Patent Application Publication No. 2011-216495
PATENT LITERATURE 4: Japanese Unexamined Patent Application Publication No. 2020-123440
PATENT LITERATURE 5: Japanese Unexamined Patent Application Publication No. 2020-123441
PATENT LITERATURE 6: Japanese Patent No. 5904371

### SUMMARY

In recent years, non-aqueous electrolyte secondary batteries, such as lithium-ion secondary batteries, have been used as power sources for driving vehicles, and required to have even higher capacities. As disclosed in the above patent literatures, various studies have been made on positive electrode active materials, but conventional positive electrode active materials including those in the above patent literatures still have much room for improvement from the viewpoint of an increase in capacity.

A positive electrode active material for a non-aqueous electrolyte secondary battery according to the present disclosure is a positive electrode active material for a non-aqueous electrolyte secondary battery, being a composite oxide represented by a compositional formula LiₓNa_{y}NiₐM₁₋ₐO_{d}, wherein M represents at least one selected from the group consisting of transition metal elements and main-group elements other than Li, Na, and Ni; 0.80 ≤ x ≤ 1.15, 0.02 ≤ y ≤ 0.20, 0.90 ≤ x+y ≤ 1.20; and 0.40 ≤ a ≤ 0.95 are satisfied; and d is a value satisfying electroneutrality, in which when 1 L of water is added to 1000 g of the composite oxide, a concentration of an alkaline component eluted into the water is less than 700 mmol/L.

A method for producing a positive electrode active material according to the present disclosure includes the steps of: synthesizing a sodium composite oxide represented by a compositional formula Na_{z}Ni_{b}M_{1-b}Oₑ, wherein M represents at least one selected from the group consisting of transition metal elements and main-group elements other than Li, Na, and Ni, z ≥ 0.90 and 0.40 ≤ b ≤ 0.95 are satisfied, and e is a value satisfying electroneutrality; and reacting the sodium composite oxide with a lithium compound to replace a part of Na in the sodium composite oxide with Li, in which the lithium compound includes at least one selected from the group consisting of lithium hydroxide, lithium carbonate, and lithium hydrogen carbonate.

A non-aqueous electrolyte secondary battery according to the present disclosure comprises: a positive electrode including the above positive electrode active material; a negative electrode; and a non-aqueous electrolyte.

According to the positive electrode active material of the present disclosure, increase in capacity of the non-aqueous electrolyte secondary battery can be achieved.

### BRIEF DESCRIPTION OF DRAWING

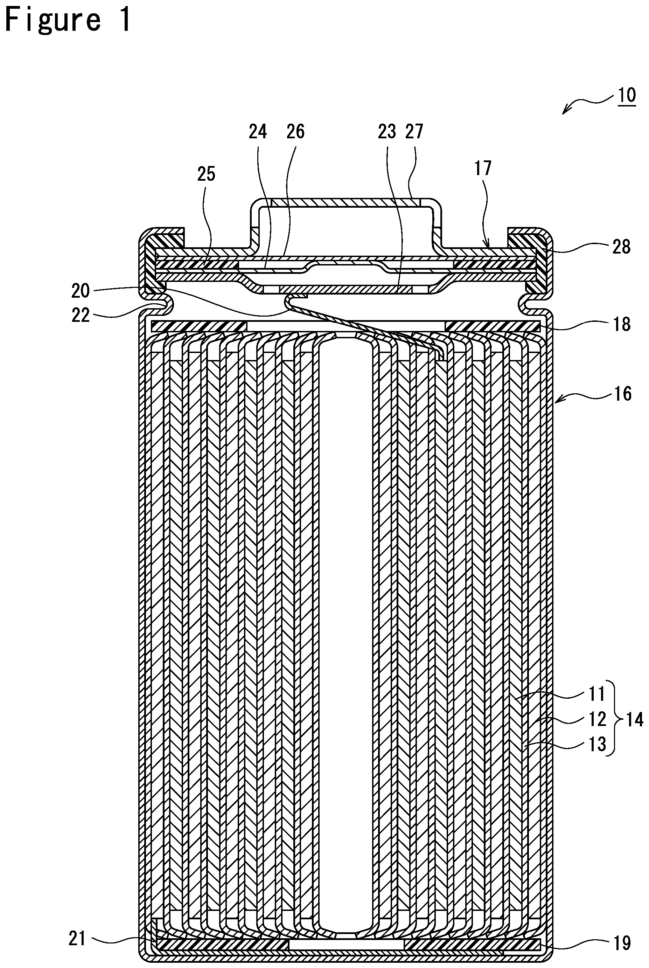

FIG. 1 is a longitudinal sectional view of a non-aqueous electrolyte secondary battery of an example of an embodiment.

### DESCRIPTION OF EMBODIMENTS

As a result of intensive studies aimed at increasing the capacity of a non-aqueous electrolyte secondary battery, the present inventors have found that the battery capacity significantly increases by using, as a positive electrode active material, a lithium sodium-containing transition metal composite oxide represented by the above compositional formula, in which when 1 L of water is added to 1000 g of the composite oxide, the concentration of an alkaline component eluted into the water is less than 700 mmol/L. When the elution amount of the alkaline component is less than 700 mmol/L, the properties of the positive electrode slurry used in the production of the positive electrode are stabilized, thereby improving productivity. On the other hand, when the elution amount of the alkaline component is greater than or equal to 700 mmol/L, a defect such as gelation of the positive electrode slurry occurs, making it difficult to use in actual production.

The positive electrode active material according to the present disclosure can be obtained by synthesizing a sodium composite oxide and then replacing a part of Na in the sodium composite oxide with Li to leave a predetermined amount of Na. The residual amount of Na in the positive electrode active material according to the present disclosure is larger than that in the positive electrode active material synthesized by a conventionally known ion exchange method. By controlling the residual amount of Na within a specific range, the battery capacity is specifically improved. It is considered that a predetermined amount of Na stabilizes a crystal structure of the positive electrode active material, and as a result, a large increase in capacity can be achieved.

In the positive electrode active material according to the present disclosure, it is considered that Na controlled to the specific range described above is taken into the crystal structure, and this Na is not eluted even when the positive electrode active material is repeatedly washed with water. In contrast, in the positive electrode active materials synthesized by a method of mixing and calcinating a transition metal oxide, a lithium compound, and a sodium compound as disclosed in Patent Literatures 4 to 6, substantially all of Na is eluted by washing with water. That is, the positive electrode active material according to the present disclosure and the positive electrode active materials disclosed in Patent Literatures 4 to 6 are considered to be completely different materials.

Hereinafter, an example of embodiments of the positive electrode active material for a non-aqueous electrolyte secondary battery according to the present disclosure and the non-aqueous electrolyte secondary battery using this positive electrode active material will be described in detail with reference to the drawings. The scope of the present disclosure includes configurations composed of selective combinations of constitutional elements of a plurality of embodiments and modified examples described below.

In the embodiment described below, a non-aqueous electrolyte secondary battery 10 being a cylindrical battery in which a wound electrode assembly 14 is housed in a bottomed cylindrical exterior housing can 16 will be exemplified, but the exterior body of the battery is not limited to the cylindrical exterior housing can. Examples of other embodiments of the non-aqueous electrolyte secondary battery according to the present disclosure include: a rectangular battery comprising a rectangular exterior housing can; a coin battery comprising a coin-shaped exterior housing can; and a pouch battery comprising an exterior body constituted with laminated sheets including a metal layer and a resin layer. The electrode assembly is not limited to the wound electrode assembly, and may be a stacked electrode assembly in which a plurality of positive electrodes and a plurality of negative electrodes are alternately stacked via a separator.

FIG. 1 is a sectional view of the non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The non-aqueous electrolyte secondary battery 10 is, for example, a lithium-ion secondary battery. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening portion on one end side in an axial direction, and the opening portion of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction (longer direction) and a width direction (shorter direction). The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening portion of the exterior housing can 16 crimping the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, the separator 13, and the non-aqueous electrolyte, which constitute the non-aqueous electrolyte secondary battery 10, specifically the positive electrode 11, will be described in detail.

### [Positive Electrode]

The positive electrode 11 has a positive electrode core and a positive electrode mixture layer disposed on the positive electrode core. For the positive electrode core, a foil of a metal stable within a potential range of the positive electrode 11, such as aluminum, an aluminum alloy, stainless steel, and titanium, a film in which such a metal is disposed on a surface layer thereof, and the like may be used. The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, and the binder on the positive electrode core, and drying and subsequently compressing the coating film to form the positive electrode mixture layer on both the surfaces of the positive electrode core.

Examples of the conductive agent included in the positive electrode mixture layer may include carbon black such as acetylene black and Ketjenblack, graphite, carbon nanotube (CNT), carbon nanofiber, graphene, metal fiber, metal powder, and conductive whisker. The conductive agents may be used singly, or in combination thereof. A content rate of the conductive agent is not particularly limited, but is greater than or equal to 0.1 mass% and less than or equal to 5 mass% relative to a mass of the positive electrode mixture layer, for example.

Examples of the binder included in the positive electrode mixture layer include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), or the like. The binders may be used singly, or in combination thereof. A content rate of the binder is not particularly limited, but is greater than or equal to 0.1 mass% and less than or equal to 5 mass% relative to the mass of the positive electrode mixture layer, for example.

The positive electrode active material is a lithium sodium-transition metal composite oxide (Li-Na composite oxide) having a crystal structure belonging to the space group R-3m, the lithium sodium-transition metal composite oxide represented by the compositional formula LiₓNa_{y}NiₐM₁₋ₐO_{d}. In the formula, M represents at least one selected from the group consisting of transition metal elements and main-group elements other than Li, Na, and Ni, 0.80 ≤ x ≤ 1.15, 0.02 ≤ y ≤ 0.20, 0.90 ≤ x+y ≤ 1.20, and 0.40 ≤ a ≤ 0.95 are satisfied, and d is a value satisfying electroneutrality. The Li-Na composite oxide contains Li, Na, and Ni as essential elements and preferably further contains Mn. The contents of the metal elements contained in the composite oxide can be measured using an ICP optical emission spectrometer (for example, CIROS-120, manufactured by SPECTRO).

In the compositional formula LiₓNa_{y}NiₐM₁₋ₐO_{d}, the mole ratio (y) of Na may be greater than or equal to 0.02 and less than or equal to 0.20 (0.02 ≤ y ≤ 0.20), and is preferably more than or equal to 0.04, more preferably more than or equal to 0.06. The upper limit of the mole ratio (y) of Na is preferably 0.18, more preferably 0.16. When the mole ratio (y) of Na exceeds 0.20, Na ions may be extracted during charge, and the extracted Na ions may be occluded in the negative electrode. As a result, a reaction with the non-aqueous electrolyte may occur during charge and discharge to generate a byproduct, resulting in a decrease in charge-discharge capacity and charge-discharge efficiency of the battery.

An example of a preferable range of the mole ratio (y) of Na satisfies 0.02 ≤ y ≤ 0.18, 0.02 ≤ y ≤ 0.16, 0.04 ≤ y ≤ 0.20, 0.04 ≤ y ≤ 0.18, 0.04 ≤ y ≤ 0.16, 0.06 ≤ y ≤ 0.20, 0.06 ≤ y ≤ 0.18, or 0.06 ≤ y ≤ 0.16, among which 0.04 ≤ y ≤ 0.18 or 0.06 ≤ y ≤ 0.16 are preferably satisfied. It is considered that, when the mole ratio (y) of Na is within the range, the layered structure of the composite oxide is stable, and the effect of improving the charge-discharge capacity becomes more remarkable.

In the compositional formula LiₓNa_{y}NiₐM₁₋ₐO_{d}, the mole ratio (x) of Li may be greater than or equal to 0.80 and less than or equal to 1.15 (0.80 ≤ x ≤ 1.15), and is preferably more than or equal to 0.82, more preferably more than or equal to 0.84. The upper limit of the mole ratio (x) of Li is preferably 1.00, more preferably 0.95. An example of a preferable range of the mole ratio (x) of Li satisfies 0.80 ≤ x ≤ 1.00, 0.80 ≤ x ≤ 0.95, 0.82 ≤ x ≤ 1.15, 0.82 ≤ x ≤ 1.00, 0.82 ≤ x ≤ 0.95, 0.84 ≤ x ≤ 1.15, 0.84 ≤ x ≤ 1.00, or 0.84 ≤ x ≤ 0.95. When the mole ratio (x) of Li is within the range, the effect of improving the capacity becomes more remarkable.

In the compositional formula LiₓNa_{y}NiₐM₁₋ₐO_{d}, the total mole ratio (x+y) of Li and Na may be greater than or equal to 0.90 and less than or equal to 1.20 (0.90 ≤ x+y ≤ 1.20), and is preferably more than or equal to 0.92, more preferably more than or equal to 0.94. The upper limit of the total mole ratio (x+y) of Li ad Na is preferably 1.10, more preferably 1.05. An example of a preferable range of the total mole ratio (x+y) of Li and Na satisfies 0.90 ≤ x+y ≤ 1.10, 0.90 ≤ x+y ≤ 1.05, 0.92 ≤ x+y ≤ 1.20, 0.92 ≤ x+y ≤ 1.10, 0.92 ≤ x+y ≤ 1.05, 0.94 ≤ x+y ≤ 1.20, 0.94 ≤ x+y ≤ 1.10, or 0.94 ≤ x+y ≤ 1.05. When the total mole ratio (x+y) of Li and Na is within the range, the effect of improving the capacity becomes more remarkable.

In the compositional formula LiₓNa_{y}NiₐM₁₋ₐO_{d}, the mole ratio (a) of Ni may be greater than or equal to 0.40 and less than or equal to 0.95 (0.40 ≤ a ≤ 0.95), and is preferably more than or equal to 0.45, more preferably more than or equal to 0.50. The upper limit of the mole ratio (a) of Ni is preferably 0.75, more preferably 0.70. An example of a preferable range of the mole ratio (a) of Ni satisfies 0.40 ≤ a ≤ 0.75, 0.40 ≤ a ≤ 0.70, 0.45 ≤ a ≤ 0.95, 0.45 ≤ a ≤ 0.75, 0.45 ≤ a ≤ 0.70, 0.50 ≤ a ≤ 0.95, 0.50 ≤ a ≤ 0.75, or 0.50 ≤ a ≤ 0.75, among which 0.45 ≤ y ≤ 0.75 or 0.50 ≤ y ≤ 0.70 are preferably satisfied. When the mole ratio (a) of Ni is within the range, it becomes easy to increase the capacity while suppressing the material cost.

In the compositional formula LiₓNa_{y}NiₐM₁₋ₐO_{d}, an example of M is Co, Mn, Al, Be, B, Mg, Si, K, Ca, Sc, Ti, V, Cr, Fe, Cu, Zn, Ga, Sr, Y, Zr, Nb, Mo, In, Sn, Sb, Ba, Ta, W, Pb, Bi, or the like. M represents at least one element selected from the group consisting of these elements. Among these, at least one selected from the group consisting of Mn, Co, Al, Fe, Ti, Mg, Ca, Sr, and Si is preferable, and as described above, M preferably contains at least Mn. In the compositional formula LiₓNa_{y}NiₐM₁₋ₐO_{d}, the mole ratio (1-a) of M is preferably greater than or equal to 0.05 and less than or equal to 0.60, more preferably greater than or equal to 0.25 and less than or equal to 0.55, and particularly preferably greater than or equal to 0.30 and less than or equal to 0.50.

In the compositional formula LiₓNa_{y}NiₐM₁₋ₐO_{d}, the mole ratio (d) of O is a value satisfying electroneutrality. In other words, the value satisfies the valence of O in the positive electrode active material. The mole ratio (d) of O is not particularly limited as long as it satisfies the valence in the positive electrode active material, and may satisfy, for example, d = x + y + 1, d < x + y + 1, or d > x + y + 1. Particularly, in the positive electrode active material immediately after production, when d < x + y + 1, the structure is a layered rock-salt structure deficient in oxygen. The mole ratio (d) of O is preferably greater than or equal to 1.8 and less than or equal to 2.3, for example.

The positive electrode active material is a Li-Na composite oxide having a composition represented by the above compositional formula, and contains, as a main component, a Li-Na composite oxide in which when 1 L of water is added to 1000 g of the composite oxide, the concentration of the alkaline component eluted into the water is less than 700 mmol/L. Here the main component means a component having the highest mass ratio among constituent components of the positive electrode active material. In the positive electrode mixture layer, a composite oxide other than the Li-Na composite oxide may be used in combination as the positive electrode active material, and the content of the Li-Na composite oxide is preferably greater than or equal to 50 mass%, and may be substantially 100 mass%.

When 1 L of water is added to 1000 g of the Li-Na composite oxide, the concentration of the alkaline component eluted into the water is preferably less than or equal to 500 mmol/L, more preferably less than or equal to 300 mmol/L, and particularly preferably less than or equal to 100 mmol/L. When the elution amount of the alkaline component is greater than or equal to 700 mmol/L, a defect such as gelation of the positive electrode mixture slurry occurs, making it difficult to use in actual production. When the elution amount of the alkaline component is, for example, less than or equal to 100 mmol/L, the positive electrode mixture slurry is particularly stable, and a high-quality positive electrode 11 can be produced even in actual production. The lower limit of the elution amount of the alkaline component is not particularly limited, and is, for example, 10 mmol/L. Excessive removal of the alkaline component is highly likely to cause alkali metal desorption from the active material, which may result in capacity deterioration and resistance increase.

The alkaline component is mainly due to Li and Na which are not taken into the crystal structure of the composite oxide but are present on the surface of the particles. In other words, the Li-Na composite oxide is used by washing with water until the elution amount of the alkaline component becomes less than 700 mmol/L. Na which has been taken into the crystal structure of the Li-Na composite oxide is substantially not eluted in the step of washing with water of the composite oxide, and the mole ratio (y) of Na does not substantially change even when the washing with water is repeated. The Li-Na composite oxide is, for example, a composite oxide satisfying the composition formula LiₓNa_{y}NiₐM₁₋ₐO_{d} when washed with water until the elution amount of the alkaline component becomes less than or equal to 100 mmol/L or substantially 0 (measurement limit).

The Li-Na composite oxide is formed of, for example, secondary particles each formed by aggregation of a plurality of primary particles. The Li-Na composite oxide has a volume-based median diameter (D50) of greater than or equal to 1 µm and less than or equal to 30 µm, or greater than or equal to 3 µm and less than or equal to 20 µm, for example. The D50 of the composite oxide is a particle diameter at which the volume integrated value is 50% in particle size distribution measured by a laser diffraction scattering method. A BET specific surface area of the Li-Na composite oxide is, for example, greater than or equal to 0.1 m²/g and less than or equal to 10 m²/g, or greater than or equal to 0.5 m²/g and less than or equal to 5 m²/g. The BET specific surface area of the composite oxide is measured according to a BET method (nitrogen adsorption method) described in JIS R1626. When the D50 and the BET specific surface area are within the range, the capacity can be easily increased.

A Li-Na composite oxide is produced through (1) a step of mixing and calcinating a sodium raw material and a nickel raw material to synthesize a sodium composite oxide and (2) a step of reacting the sodium composite oxide with a lithium compound to replace a part of Na in the sodium composite oxide with Li. In step (1), a sodium composite oxide represented by the composition formula Na_{z}Ni_{b}M_{1-b}Oₑ, wherein M represents at least one selected from the group consisting of transition metal elements and main-group elements other than Li, Na, and Ni; z ≥ 0.90 and 0.40 ≤ b ≤ 0.95 are satisfied; and e is a value satisfying electroneutrality, is synthesized.

In the compositional formula Na_{z}Ni_{b}M_{1-b}Oₑ, M is the same as M in the above compositional formula LiₓNa_{y}NiₐM₁₋ₐO_{d}, and preferably includes at least Mn. That is, a manganese raw material is preferably added in step (1). In the compositional formula Na_{z}Ni_{b}M_{1-b}Oₑ, the mole ratio (b) of Ni and the mole ratio (e) of O are the same as a and d in the compositional formula LiₓNa_{y}NiₐM₁₋ₐO_{d}, respectively. The mole ratio (z) of Na may be greater than or equal to 0.90, and is preferably greater than or equal to 0.95 and less than or equal to 1.05.

At least one selected from the group consisting of metallic sodium and a sodium compound is used as the sodium raw material. The sodium compound is not particularly limited as long as it contains Na, and examples thereof include an acetate such as CH₃COONa and CH₃COONa·3H₂O, a nitrate such as NaNO₃, a sulfate such as Na₂SO₄, a carbonate such as Na₂CO₃, a bicarbonate such as NaHCO₃, a hydroxide such as NaOH, and an oxide such as Na₂O and Na₂O₂. Among these, Na₂CO₃, NaHCO₃, NaOH, and NaNO₃ are preferable.

At least one selected from the group consisting of metallic nickel and a nickel compound is used as the nickel raw material. The nickel compound is not particularly limited as long as it contains Ni, and examples thereof include an oxide such as NiO, a hydroxide such as NiOH, Ni(OH)₂, and NiOOH, a nitrate such as NiNO₃, a carbonate such NiCO₃, and Ni₄CO₃(OH)₆(H₂O)₄, and a sulfate such as NiSO₄. Among these, Ni(OH)₂ is preferable.

At least one selected from the group consisting of metallic manganese and a manganese compound is used as the manganese raw material. The manganese compound is not particularly limited as long as it contains Mn, and examples thereof include an oxide such as MnO, Mn₂O₃, Mn₃O₄, and MnO₂, a hydroxide such as Mn(OH)₂ and MnOOH, a carbonate such as MnCO₃, a nitrate such as Mn(NO₃)₂, and a sulfate such as MnSO₄. Among these, Mn(OH)₂ is preferable.

For example, the mixing ratio of the raw materials of the sodium composite oxide is set so as to satisfy the above compositional formula Na_{z}Ni_{b}M_{1-b}Oₑ. A method of mixing the raw materials is not particularly limited as long as the raw materials are uniformly mixed, for example, mixing using a known mixing machine such as a mixer can be used to mix.

The mixture of the raw materials is calcined in the atmosphere or in an oxygen stream using a calcining furnace. The calcining temperature is preferably greater than or equal to 700°C and less than or equal to 900°C, and more preferably greater than or equal to 750°C and less than or equal to 850°C. The temperature rising rate is preferably slow, for example, greater than or equal to 0.3°C/min and less than or equal to 5.0°C/min, or greater than or equal to 0.5°C/min and less than or equal to 3.0°C/min. The calcining time is preferably greater than or equal to 20 hours when the calcining temperature is greater than or equal to 750°C and less than or equal to 850°C. Herein, the calcining time means the time from when the temperature of the calcining furnace reaches the calcining temperature above until the calcination is completed and cooling starts. The calcined product is rapidly cooled in the atmosphere by being removed from the calcining furnace.

In step (2), a part of Na in the sodium composite oxide is replaced with Li. That is, it is necessary to perform Li replacement so that a predetermined amount of Na remains. A preferable method of replacing Na with Li includes a method including adding a molten salt bed of a lithium salt to a sodium composite oxide and heating the mixture. For example, at least one selected from the group consisting of lithium nitrate, lithium sulfate, lithium chloride, lithium carbonate, lithium hydroxide, lithium iodide, and lithium bromide is used as the lithium salt, at least one selected from the group consisting of lithium hydroxide, lithium carbonate, and lithium hydrogen carbonate is preferably used, and a lithium hydroxide is more preferably used.

The lithium hydroxide may be an anhydride or a hydrate. By using at least one selected from the group consisting of lithium hydroxide, lithium carbonate, and lithium hydrogen carbonate, and particularly lithium hydroxide as the lithium molten salt, a predetermined amount of Na can be easily left, and the mole ratio (y) of Na can be controlled within the above range. When lithium hydroxide is used as the lithium molten salt, the mole ratio of lithium hydroxide to the total mole of the lithium molten salt is preferably greater than or equal to 25 mol%, more preferably greater than or equal to 50 mol%, and still more preferably greater than or equal to 75 mol%. Further, substantially only lithium hydroxide may be used as the lithium molten salt.

In step (2), the mixing ratio of the Na composite oxide and the lithium molten salt can be set as appropriate according to the ratio of lithium hydroxide contained in the lithium molten salt. When only lithium hydroxide is used as the lithium molten salt, the mixing ratio of the Na composite oxide and the lithium molten salt is set such that the mole ratio (Li/Na) of Li in the lithium molten salt to Na in the Na composite oxide is, for example, greater than or equal to 0.8 and less than or equal to 1.2, and a suitable content rate of Li and Na in the compositional formula LiₓNa_{y}NiₐM₁₋ₐO_{d} is satisfied.

The heating temperature in the Li replacing step is preferably greater than or equal to 200°C and less than or equal to 400°C, and more preferably greater than or equal to 250°C and less than or equal to 350°C. When the heating temperature exceeds 400°C, the reaction may proceed rapidly, causing a non-uniform reaction. On the other hand, when the heating temperature falls below 200°C, the reaction does not sufficiently proceed, and Na tends to remain in excess. The heat treatment time is set to, for example, greater than or equal to 3 hours and less than or equal to 10 hours after the temperature is increased at a temperature rising rate of greater than or equal to 3.0°C/min and less than or equal to 8.0°C/min to reach the desired heat treatment temperature. Cooling is performed after the heat treatment. Note that a cooling method is not particularly limited, and is, for example, natural cooling (in-furnace cooling).

The product after the ion exchange is washed with water to remove alkaline components (Li and Na) present on the surface of the particles. In the washing step, a solvent such as ethanol or methanol may be used in combination. The Li-Na composite oxide is obtained by drying the product after the washing with water. The drying after washing is carried out in an atmosphere or vacuum, and is not particularly limited. After washing, heat treatment or washing treatment may be carried out again. As described above, the product after the ion exchange is washed with water until the elution amount of the alkaline component is less than 700 mmol/L.

### [Negative Electrode]

The negative electrode 12 has a negative electrode core and a negative electrode mixture layer disposed on the negative electrode core. For the negative electrode core, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer includes a negative electrode active material and a binder, and is preferably provided on both surfaces of the negative electrode core. The negative electrode 12 may be produced by, for example, applying a negative electrode mixture slurry including the negative electrode active material and the binder on the negative electrode core, and drying and subsequently compressing the coating film to form the negative electrode mixture layer on both the surfaces of the negative electrode core. A metal lithium foil may be used as the negative electrode 12. Alternatively, the negative electrode 12 may be composed only of a negative electrode core, and metal lithium may precipitate on the surface of the core during charge of the battery.

The negative electrode active material is not particularly limited as long as the material reversibly occludes and releases lithium ions, and a carbon material such as graphite is generally used. For the negative electrode active material, an element that forms an alloy with Li, such as Si and Sn, a material containing such an element, and the like may be used. Among these, a silicon-containing material containing Si is preferable. As the negative electrode active material, lithium titanate, which has a higher potential of charge and discharge relative to metal lithium than that of the carbon material and the like, may also be used. The negative electrode active materials may be used singly, or in combination thereof.

The carbon material to function as the negative electrode active material is, for example, at least one selected from the group consisting of natural graphite, artificial graphite, soft carbon, and hard carbon. Among these, artificial graphite such as massive artificial graphite (MAG) and graphitized mesophase-carbon microbead (MCMB), natural graphite such as flake graphite, massive graphite, and amorphous graphite, or a mixture thereof are preferably used. Examples of the silicon-containing material to function as the negative electrode active material include a silicon alloy, a silicon compound, and a composite material containing Si. A preferable silicon-containing material is of composite particles including an ion-conductive phase and Si phases dispersed in the ion-conductive phase.

For the binder included in the negative electrode mixture layer, a fluororesin, an olefin resin, PAN, a polyimide, a polyamide, an acrylic resin, and the like may be used as in the case of the positive electrode 11, and polyvinyl acetate, styrene-butadiene rubber (SBR), and the like may be used. Among these, SBR is preferably used. The binders may be used singly, or in combination thereof. The negative electrode mixture layer preferably includes CMC or a salt thereof, polyacrylic acid (PAA) or a salt thereof, polyvinyl alcohol (PVA), or the like. These materials function as a thickener in the negative electrode mixture slurry. A content rate of the binder is not particularly limited, but is, for example, greater than or equal to 0.1 mass% and less than or equal to 5 mass% relative to the mass of the negative electrode mixture layer. The negative electrode mixture layer may include a conductive agent such as CNT.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin may be formed.

On a boundary between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

### [Non-Aqueous Electrolyte]

The non-aqueous electrolyte has ion conductivity (for example, lithium-ion conductivity). The non-aqueous electrolyte may be a liquid electrolyte (an electrolyte liquid) or may be a solid electrolyte.

The liquid electrolyte (the electrolyte liquid) includes a non-aqueous solvent and an electrolyte salt dissolved in the non-aqueous solvent. For the non-aqueous solvent, esters, ethers, nitriles such as acetonitrile, amides such as dimethylformamide, and a mixed solvent of greater than or equal to two thereof, and the like are used, for example. The non-aqueous solvent may contain a halogen-substituted product in which hydrogen of these solvents is at least partially replaced with a halogen atom such as fluorine. Examples of the halogen-substituted product include fluorinated cyclic carbonate esters such as fluoroethylene carbonate (FEC), fluorinated linear carbonate esters, and fluorinated linear carboxylic acid esters such as methyl fluoropropionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane ethylthyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lower aliphatic carboxylic acid lithium, LiCl, LiBr, LiI, a phosphate salt, a borate salt, and an imide salt. Examples of the phosphate salt include lithium difluorophosphate (LiPO₂F₂), lithium difluorobis(oxalato)phosphate (LiDFBOP), and lithium tetrafluoro(oxalato)phosphate. Examples of the borate salt include lithium bis(oxalato)borate (LiBOB) and lithium difluoro(oxalato)borate (LiDFOB). For the imide salt, lithium bisfluorosulfonylimide (LiN(FSO₂)₂), lithium bistrifluoromethanesulfonylimide (LiN(CF₃SO₂)₂), lithium trifluoromethanesulfonyl nonafluorobutanesulfonylimide (LiN(CF₃SO₂)(C₄F₉SO₂)), lithium bispentafluoroethanesulfonylimide (LiN(C₂F₅SO₂)₂), or the like is used. Among these, LiPF₆ is preferably used from the viewpoint of ion conductivity and electrochemical stability. The concentration of the lithium salt may be, for example, less than or equal to 4 mol per liter of non-aqueous solvent, may be less than or equal to 3 mol, and is preferably less than or equal to 1.8 mol, and more preferably greater than or equal to 0.8 mol and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, a halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

### EXAMPLES

Hereinafter, the present disclosure will be further described with Examples, but the present disclosure is not limited to these Examples.

### <Example 1>

### [Production of Positive Electrode Active Material]

A hydroxide containing Ni and Mn at a mole ratio of 1:1 and sodium carbonate were mixed at a mole ratio of Ni:Mn:Na = 0.5:0.5:1.05, and the obtained mixture was heated at a temperature rising rate of 1°C/min, calcined in air at 800°C for 24 hours, and then rapidly cooled in air to obtain a Na-containing composite oxide. Next, lithium hydroxide and a Na-containing composite oxide were mixed at a mole ratio of Li:Na = 1:1, and the obtained mixture was heated at a temperature rising rate of 2°C/min and heated in air at 300°C for 2 hours. Thereafter, the product was cooled at a temperature falling rate of 2°C/min and washed with water, followed by heat treatment in a vacuum at 160°C for 4 hours to obtain a Li-Na composite oxide (positive electrode active material).

The washing of the product with water after the ion-exchange treatment was carried out by adding 1 L of water per 1000 g of the product and stirring, and then performing solid-liquid separation using a centrifuge. In Example 1, this washing was repeated three times. In this washing step, alkaline components adhering to the surface of the product in the ion-exchange step or the like are removed.

The composition of the obtained Li-Na composite oxide was measured using an ICP optical emission spectrometer (CIROS-120, manufactured by SPECTRO). As a result, the ratio ((Li + Na)/Me) of the total molar amount of Li and Na to the molar amount of the metal element Me excluding Li and Na in the composite oxide was 0.984, and the ratio (Na/Me) of the molar amount of Na to the molar amount of the metal element Me in the composite oxide was 0.130. That is, the compositional formula of the Li-Na composite oxide was Li_{0.854}Na_{0.130}Ni_{0.5}Mn_{0.5}O₂.

### [Production of Positive Electrode]

For the positive electrode active material, the Li-Na composite oxide was used. The positive electrode active material, acetylene black, and polyvinylidene fluoride were mixed at a solid mass ratio of 92:5:3, and N-methyl-2-pyrrolidone (NMP) was used as a dispersion medium to prepare a positive electrode mixture slurry. The positive electrode slurry was applied to a positive electrode core composed of an aluminum foil, and the coating film was dried and then rolled by a rolling roller to obtain a positive electrode in which a positive electrode mixture layer was formed on the positive electrode core.

### [Preparation of Non-Aqueous Electrolyte Liquid]

Lithium hexafluorophosphate (LiPF₆) was dissolved in a mixed solvent of fluoroethylene carbonate (FEC) and methyl propionate (FMP) at a volume ratio of 1:3 so that the concentration was 1 mol/liter to prepare a non-aqueous electrolyte liquid.

### [Production of Test Cell]

For the negative electrode, a metal lithium foil was used. The positive electrode and the negative electrode were disposed to face each other with a separator interposed therebetween to form an electrode assembly. The electrode assembly and the non-aqueous electrolyte liquid were housed in a coin-shaped exterior housing can, and an opening portion of the exterior housing can was sealed with a gasket and a sealing assembly to prepare a test cell (non-aqueous electrolyte secondary battery).

### <Example 2>

A positive electrode active material and a test cell were produced in the same manner as in Example 1 except that the number of times of washing the product with water after the ion exchange treatment was changed to twice. As a result of composition analysis of the obtained positive electrode active material, (Li + Na)/Me was 0.950, and Na/Me was 0.137.

### <Comparative Example 1>

A positive electrode active material and a test cell were produced in the same manner as in Example 1 except that the ion-exchanged product was washed with water by a method of adding 1 L of water per 1000 g of the product thereto and stirring the mixture, followed by solid-liquid separation by vacuum filtration. As a result of composition analysis of the obtained positive electrode active material, (Li + Na)/Me was 0.993, and Na/Me was 0.142.

### <Comparative Example 2>

A positive electrode active material and a test cell were produced in the same manner as in Comparative Example 1 except that a mixture of lithium nitrate and lithium chloride at a molar mass ratio of 88:12 was used instead of lithium hydroxide as the Li raw material to be added in the ion exchange step of the Na-containing composite oxide. As a result of composition analysis of the obtained positive electrode active material, (Li + Na)/Me was 0.929, and Na/Me was 0.010.

### <Comparative Example 3>

A hydroxide containing Ni and Mn at a mole ratio of 1:1, lithium carbonate and sodium carbonate were mixed at a mole ratio of Ni:Mn:Li:Na = 0.5:0.5:1.10:0.05, and the obtained mixture was heated at a temperature rising rate of 1°C /min, calcined in air at 800°C for 24 hours, and then rapidly cooled in air to obtain a Li-Na composite oxide. Thereafter, the composite oxide was washed with water in the same manner as in Comparative Example 1, followed by heat treatment in a vacuum at 160°C for 4 hours to obtain a Li-Na composite oxide (positive electrode active material). As a result of composition analysis of the obtained positive electrode active material, (Li + Na)/Me was 1.117, and Na/Me was 0.017.

### <Comparative Example 4>

A positive electrode active material and a test cell were produced in the same manner as in Comparative Example 1 except that lithium hydroxide and Na-containing composite oxide was mixed at a mole ratio of Li:Na = 0.8:1 in the ion exchange step of the Na-containing composite oxide. As a result of composition analysis of the obtained positive electrode active material, (Li + Na)/Me was 0.737, and Na/Me was 0.311.

### <Comparative Example 5>

A positive electrode active material and a test cell were produced in the same manner as in Comparative Example 3, except that the Li-Na composite oxide synthesized in Comparative Example 3 was washed twice with water by the same method as in Comparative Example 1. As a result of composition analysis of the obtained positive electrode active material, (Li + Na)/Me was 1.110, and Na/Me was less than or equal to 0.001.

### <Reference Example>

A hydroxide containing Ni and Mn at a mole ratio of 1:1 and lithium hydroxide were mixed at a mole ratio of Ni:Mn:Li = 0.5:0.5:1.09, and the obtained mixture was heated at a temperature rising rate of 1°C /min, calcined in air at 800°C for 24 hours, and then rapidly cooled in air to obtain a Li composite oxide. Thereafter, the composite oxide was washed with water in the same manner as in Comparative Example 1, followed by heat treatment in a vacuum at 160°C for 4 hours to obtain a Li composite oxide (positive electrode active material). As a result of composition analysis of the obtained positive electrode active material, Li/Me was 1.09.

For each of Examples and Comparative Examples, the elution amount of the alkaline component of the positive electrode active material, the discharge capacity of the test cell, and the properties of the positive electrode mixture slurry were evaluated by the following methods. The evaluation results are shown in Table 1, together with the synthesis method of the positive electrode active material and the values of (Li + Na)/Me and Na/Me.

### [Evaluation of Elution Amount of Alkaline Component]

After 1 L of water per 1000 g of the active material was added to each of the positive electrode active materials of Examples and Comparative Examples, solid-liquid separation was performed, and the concentration (elution amount) of the alkaline components (Li + Na) in the filtrate were measured using ICP optical emission spectrometry.

### [Evaluation of Discharge Capacity]

Each of the test cells of Examples and Comparative Examples was charged at a constant current of 0.2 C until the battery voltage reached 4.5 V under a condition of 25°C, and then charged at a constant voltage of 4.5 V until the current value reached 0.02 C. The test cells were rested for 20 minutes and then discharged at a constant current of 0.2 C until the battery voltage reached 2.5 V to determine discharge capacities.

### [Evaluation of Positive Electrode Mixture Slurry]

The positive electrode mixture slurry prepared in the production of each of the positive electrodes of Examples and Comparative Examples was allowed to stand in an environment at 25°C for 7 days, and the change in the properties of the slurry was observed. The evaluation results shown in Table 1 are as follows:
Good: No change
Bad: Slurry gelation occurred

**[Table 1]**

| | Synthesis method | (Li+Na)/Me | Na/Me | Elution amount (mmol/L) | Discharge capacity (mAh) | Slurry property |
|---|---|---|---|---|---|---|
| Example 1 | Ion exchange | 0.984 | 0.130 | 30 | 206.0 | Good |
| Example 2 | Ion exchange | 0.950 | 0.137 | 70 | 208.1 | Good |
| Comparative Example 1 | Ion exchange | 0.993 | 0.142 | 767 | 205.8 | Bad |
| Comparative Example 2 | Ion exchange | 0.929 | 0.010 | 700 | 183.2 | Bad |
| Comparative Example 3 | Addition of sodium during calcination | 1.117 | 0.017 | 406 | 160.8 | Good |
| Comparative Example 4 | Ion exchange | 0.737 | 0.311 | - | 165.8 | - |
| Comparative Example 5 | Addition of sodium during calcination | 1.110 | ≦0.001 | - | 160.0 | - |
| Reference Example | Sodium-free | 1.090 | - | 45 | 175.7 | - |

As shown in Table 1, the test cells of the Examples have a higher capacity than the test cells of Comparative Examples 2 to 5 and Reference Example. That is, by using, as the positive electrode active material, a Li-Na composite oxide in which the residual amount of Na is controlled so that (Li + Na)/Me is greater than or equal to 0.90 and less than or equal to 1.20 and Na/Me is greater than or equal to 0.02 and less than or equal to 0.20, the discharge capacity can be greatly improved. When the Na/Me of the positive electrode active material is less than 0.02 (Comparative Examples 2 and 3 and Reference Example) or when the Na/Me exceeds 0.02 (Comparative Example 4), the discharge capacity is significantly lower than that of the test cells of Examples. In addition, when a positive electrode active material in which the elution amount of an alkaline component is greater than or equal to 700 mmol/L is used (Comparative Examples 1 and 2), the positive electrode mixture slurry is unstable and unable to be applied to actual production.

As can be understood from Comparative Examples 3 and 5, in the positive electrode active material obtained by the synthesis method in which a transition metal material, a Li material, and a Na material are mixed and calcinated, most of Na is eluted by washing with water. That is, the positive electrode active materials of Comparative Examples 3 and 5 and the positive electrode active materials of Examples are considered to be completely different materials, and when the positive electrode active materials of Comparative Examples 3 and 5 are used, the capacity of the battery cannot be increased.

The present disclosure will be further described with the following embodiments.

Constitution 1: A positive electrode active material for a non-aqueous electrolyte secondary battery, the positive electrode active material being a composite oxide represented by a compositional formula LiₓNa_{y}NiₐM₁₋ₐO_{d}, wherein M represents at least one selected from the group consisting of transition metal elements and main-group elements other than Li, Na, and Ni, 0.80 ≤ x ≤ 1.15, 0.02 ≤ y ≤ 0.20, 0.90 ≤ x+y ≤ 1.20, and 0.40 ≤ a ≤ 0.95 are satisfied, and d is a value satisfying electroneutrality, wherein when 1 L of water is added to 1000 g of the composite oxide, a concentration of an alkaline component eluted into the water is less than 700 mmol/L.

Constitution 2: The positive electrode active material for a non-aqueous electrolyte secondary battery according to Constitution 1, wherein in the compositional formula LiₓNa_{y}NiₐM₁₋ₐO_{d}, a mole ratio (a) of Ni is 0.50 ≤ a ≤ 0.70.

Constitution 3: The positive electrode active material for a non-aqueous electrolyte secondary battery according to Constitution 1 or 2, wherein in the compositional formula LiₓNa_{y}NiₐM₁₋ₐO_{d}, a mole ratio (y) of Na is 0.06 ≤ y ≤ 0.16.

Constitution 4: The positive electrode active material for a non-aqueous electrolyte secondary battery according to any one of Constitutions 1 to 3, wherein in the compositional formula LiₓNa_{y}NiₐM₁₋ₐO_{d}, M represents at least one selected from the group consisting of Mn, Co, Al, Fe, Ti, Mg, Ca, Sr, and Si.

Constitution 5: The positive electrode active material for a non-aqueous electrolyte secondary battery according to any one of Constitutions 1 to 4, wherein when 1 L of water is added to 1000 g of the composite oxide, the concentration of the alkaline component eluted into the water is less than or equal to 500 mmol/L.

Constitution 6: A method for producing a positive electrode active material for use in a non-aqueous electrolyte secondary battery, the method including the steps of: synthesizing a sodium composite oxide represented by a compositional formula Na_{z}Ni_{b}M_{1-b}Oₑ, wherein M represents at least one selected from the group consisting of transition metal elements and main-group elements other than Li, Na, and Ni, z ≥ 0.90 and 0.40 ≤ b ≤ 0.95 are satisfied, and e is a value satisfying electroneutrality; and reacting the sodium composite oxide with a lithium compound to replace a part of Na in the sodium composite oxide with Li, wherein the lithium compound includes at least one selected from the group consisting of lithium hydroxide, lithium carbonate, and lithium hydrogen carbonate.

Constitution 7: A non-aqueous electrolyte secondary battery, comprising: a positive electrode including the positive electrode active material according to any one of Constitutions 1 to 5; a negative electrode; and a non-aqueous electrolyte.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

## Claims

1. A positive electrode active material for a non-aqueous electrolyte secondary battery, the positive electrode active material being a composite oxide represented by a compositional formula LiₓNa_{y}NiₐM₁₋ₐO_{d}, wherein M represents at least one selected from the group consisting of transition metal elements and main-group elements other than Li, Na, and Ni, 0.80 ≤ x ≤ 1.15, 0.02 ≤ y ≤ 0.20, 0.90 ≤ x+y ≤ 1.20, and 0.40 ≤ a ≤ 0.95 are satisfied, and d is a value satisfying electroneutrality,
wherein when 1 L of water is added to 1000 g of the composite oxide, a concentration of an alkaline component eluted into the water is less than 700 mmol/L.

2. The positive electrode active material for a non-aqueous electrolyte secondary battery according to claim 1, wherein in the compositional formula LiₓNa_{y}NiₐM₁₋ₐO_{d}, a mole ratio (a) of Ni is 0.50 ≤ a ≤ 0.70.

3. The positive electrode active material for a non-aqueous electrolyte secondary battery according to claim 1, wherein in the compositional formula LiₓNa_{y}NiₐM₁₋ₐO_{d}, a mole ratio (y) of Na is 0.06 ≤ y ≤ 0.16.

4. The positive electrode active material for a non-aqueous electrolyte secondary battery according to claim 1, wherein in the compositional formula LiₓNa_{y}NiₐM₁₋ₐO_{d}, M represents at least one selected from the group consisting of Mn, Co, Al, Fe, Ti, Mg, Ca, Sr, and Si.

5. The positive electrode active material for a non-aqueous electrolyte secondary battery according to claim 1, wherein when 1 L of water is added to 1000 g of the composite oxide, the concentration of the alkaline component eluted into the water is less than or equal to 500 mmol/L.

6. A method for producing a positive electrode active material for use in a non-aqueous electrolyte secondary battery, the method including the steps of:
synthesizing a sodium composite oxide represented by a compositional formula Na_{z}Ni_{b}M_{1-b}Oₑ, wherein M represents at least one selected from the group consisting of transition metal elements and main-group elements other than Li, Na, and Ni, z ≥ 0.90 and 0.40 ≤ b ≤ 0.95 are satisfied, and e is a value satisfying electroneutrality; and
reacting the sodium composite oxide with a lithium compound to replace a part of Na in the sodium composite oxide with Li,
wherein the lithium compound includes at least one selected from the group consisting of lithium hydroxide, lithium carbonate, and lithium hydrogen carbonate.

7. A non-aqueous electrolyte secondary battery, comprising:
a positive electrode including the positive electrode active material according to any one of claims 1 to 5;
a negative electrode; and
a non-aqueous electrolyte.
